# EUROPÄISCHE PATENTSCHRIFT

(11) **EP 0 339 514 B1**
(45) Veröffentlichungstag und Bekanntmachung des Hinweises auf die Patenterteilung: **30.08.1995**
(21) Anmeldenummer: 89107269.6
(22) Anmeldetag: 21.04.1989
(51) Int. Cl.: G06F 7/50

(54) **Addierzelle für "Carry-Save"-Arithmetik**
Adder cell for carry-save arithmetic
Cellule d'addition pour l'arithmétique à sauvegarde des retenues

(30) Priorität: 29.04.1988 DE 3814639
(43) Veröffentlichungstag der Anmeldung: 02.11.1989
(73) Patentinhaber: SIEMENS AKTIENGESELLSCHAFT, 80333 München (DE)
(72) Erfinder: Knauer, Karl, Dr.-Ing., D-8018 Grafing (DE); Kamp, Winfried, Dipl.-Ing., D-8000 München 83 (DE)

(56) Entgegenhaltungen:
- EP-A- 0 111 021

## Beschreibung

Die Erfindung bezieht sich auf eine Addierzelle zum Aufbau eines Carry-Save-Addierers nach dem Oberbegriff des Patentanspruchs.

Ein Carry-Save-Addierer ist aus dem Buch "Computer Arithmetic" von K. Hwang, Verlag John Wiley &; Sons, New York, 1979, S. 98 bis 103, insbesondere Fig. 4.1 und Fig. 4.2 bekannt. Hierbei weist jede erste Addierzelle drei Eingänge auf, die jeweils mit gleichwertigen Bits dreier miteinander zu addierenden Binärzahlen belegt sind. Der Carry-Save-Addierer nach Fig. 4.1. besteht aus n Addierzellen, die auch als Volladdierer bezeichnet werden. Der Carry-Ausgang jeder Addierzelle wird in einem Carry-Save-Register zwischengespeichert und der nächsthöheren Addierzelle zugeführt. Eine Kombination zwischen einem Carry-Save- und Carry-Propagate-Addierer zeigt hingegen Fig. 4.2. Die Summenausgänge der ersten Carry-Save-Addierzellen sind an erste Eingänge des Carry-Propagate-Addierers geführt, die Übertragsausgänge der ersten Addierzellen (mit Ausnahme der höchstwertigen Addierzelle) über Carry-Save-Register über zweite Eingänge des Carry-Propagate-Addierers verknüpft. An den Ausgängen des Carry-Propagate-Addierers erscheint ein Summenwort als Ergebnis der Addition. Zum Unterschied von einer Addieranordnung mit Übertragsdurchlauf("Carry-Propagate")-Prinzip werden hier die Überträge aller ersten Addierzellen bei einer Addition von drei Binärzahlen gleichzeitig gebildet und stehen als Übertragswort neben dem an den ersten Addierzellen abgegriffenen Zwischensummenwort für eine Addition zur Verfügung. Ein in dieser Weise aufgebauter Addierer arbeitet nach dem "Carry-Save"-Prinzip.

Bei konventionellen Addierzellen ist die Summenlaufzeit üblicherweise deutlich größer als die Carry-Laufzeit. Dieser Unterschied liegt darin begründet, daß das Summensignal eine größere Anzahl von logischen Gattern durchlaufen muß. Diese verschiedenen Laufzeiten sind bei "Carry-Propagate"-Addierern, wie z.B. dem "Carry-Ripple"-Addierer recht sinnvoll, weil hier das Carry-Signal durch viele Stufen laufen muß, das Summensignal aber nur eine Stufe durchläuft. Anders sieht dies jedoch bei "Carry-Save"-Addierern aus, bei denen das Summen- und das Carry-Signal getrennt zu beliebigen Eingängen von nachfolgenden Addierern weitergegeben werden. Hier ist es vorteilhaft, wenn Summen- und Carry-Signal möglichst gleich schnell gebildet werden.

Der Erfindung liegt die Aufgabe zugrunde, Addierzellen für "Carry-Save"-Addierer anzugeben, bei denen Summen- und Carry-Signal annähernd gleich und sehr schnell gebildet werden. Das wird erfindungsgemäß durch eine Ausbildung der Anordnung nach dem kennzeichnenden Teil des Patentanspruchs erreicht.

Der mit der Erfindung erzielbare Vorteil besteht insbesondere darin, daß die Signale, am Summeneingang und Carry-Eingang jeweils nur noch zwei Gatter durchlaufen müssen, um den Addierausgang zu erreichen und daß zum Aufbau der erfindungsgemäßen Addierzelle eine geringe Anzahl von Schalttransistoren erforderlich ist.

Die Erfindung wird nachfolgend anhand von einem in der Zeichnung dargestellten Ausführungsbeispiel näher erläutert. Dabei zeigen:
- Fig. 1: eine konventionelle Addierzelle,
- Fig. 2: die erfindungsgemäße Addierzelle für "Carry-Save"-Arithmetik.
- Fig. 3: eine Funktionstabelle für die Addierzelle nach Fig. 1 und Fig. 2.

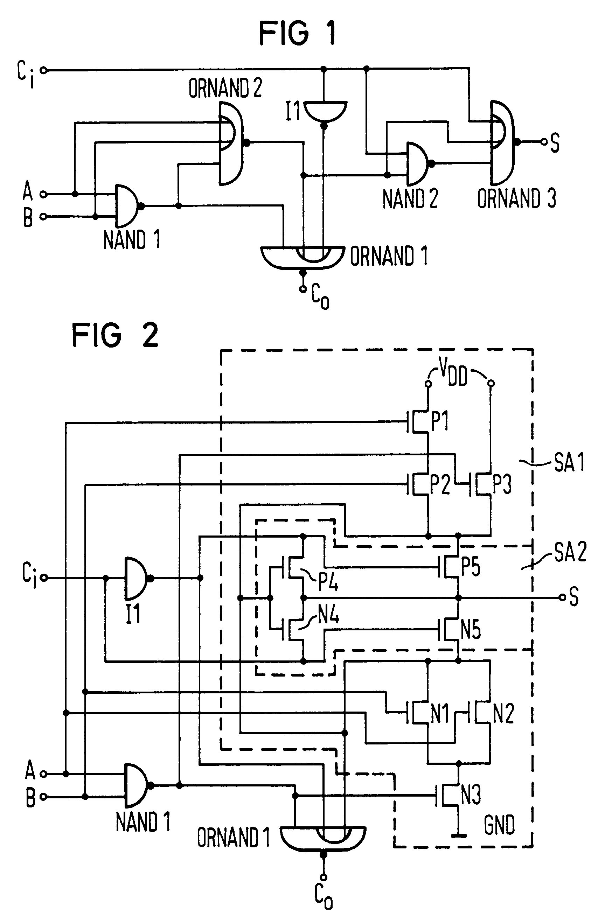

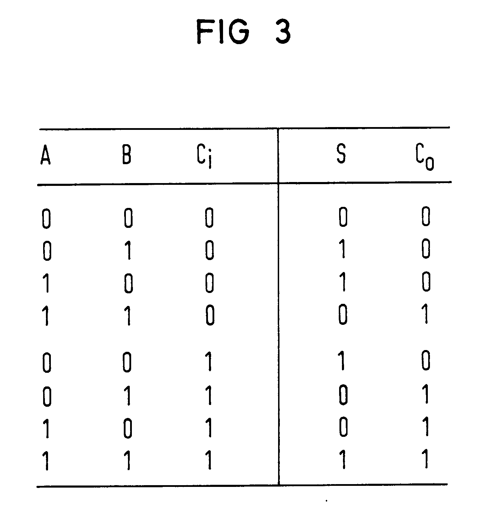

Eine konventionelle Addierzelle zeigt Fig. 1, welche aus drei ORNAND-Gatter ORNAND1, ORNAND2, ORNAND3, zwei NAND-Gatter NAND1, NAND2, sowie einem Inverter I1 besteht. Die Addierzelle enthält drei Eingänge, zwei davon sind Summandeneingänge A, B, während der dritte Eingang für das Carry Cᵢ bestimmt ist und zwei Ausgänge, davon ein Summenausgang S und ein Carry-Ausgang C_{O}. Der Carry-Eingang Cᵢ ist über einen Inverter I1 mit einem ersten ODER-Eingang des ersten ORNAND-Gatters ORNAND1 verbunden, während die Summandeneingänge A, B jeweils auf einen Eingang eines ersten NAND-Gatters NAND1 und auf jeweils einen ODER-Eingang eines zweiten ORNAND-Gatters ORNAND2 geschaltet sind. Der Ausgang des NAND-Gatters NAND1 ist sowohl an den UND-Eingang des zweiten ORNAND-Gatters ORNAND2 als auch an den UND-Eingang des ersten ORNAND-Gatters ORNAND1 angeschlossen. Hierbei bildet der Ausgang des ersten ORNAND-Gatters ORNAND1 den Carry-Ausgang C_{O} der konventionellen Addierzelle. Der Ausgang des zweiten ORNAND-Gatters ORNAND2 wird hierbei zum einen mit dem zweiten ODER-Eingang des ersten ORNAND-Gatters ORNAND1, mit einem ersten Eingang des zweiten NAND-Gatters NAND2 sowie mit dem ersten ODER-Eingang des dritten ORNAND-Gatters ORNAND3 verschaltet. Der Carry-Eingang Cᵢ der Addierzelle ist schließlich mit dem zweiten Eingang des zweiten NAND-Gatters NAND2 und mit dem zweiten ODER-Eingang des dritten ORNAND-Gatters ORNAND3 verschaltet, während der Ausgang des zweiten NAND-Gatters NAND2 mit dem UND-Eingang des dritten ORNAND-Gatters ORNAND3 verbunden ist. Der Ausgang des dritten ORNAND-Gatters ORNAND3 bildet hierbei den Summenausgang S. Bei dieser konventionellen Addierzelle ist die Summenlaufzeit, dies bedeutet die Zeit, die zur Bildung der Summe aus den Summandeneingängen A und B benötigt werden, üblicherweise deutlich grösser als die Carry-Laufzeit. Dies wird dadurch verursacht, daß das Summensignal eine größere Anzahl von Gattern durchlaufen muß. Zur Bildung des Summensignals in der Addierzelle nach Fig. 1 muß ein Signal an den Summandeneingängen A,B jeweils maximal vier Gatter durchlaufen, zur Bildung des Carry-Signals an dem Carry-Ausgang C_{O} muß ein Signal lediglich maximal drei Gatter von den Summandeneingängen A, B bzw. zwei Gatter vom Carry-Eingang Cᵢ her durchlaufen. Zur Funktionsweise der konventionellen Addierzelle nach Fig. 1 ebenso für die erfindungsgemäße Addierzelle "Carry-Save-Arithmetik" ist eine Funktionstabelle in Fig. 3 angegeben.

Fig. 2 zeigt die erfindungsgemäße Addierzelle für "Carry-Save"-Arithmetik. Sie enthält ebenso wie die konventionelle Addierzelle drei Eingänge, davon zwei Summandeneingänge A, B und einen Carry-Eingang Cᵢ, sowie zwei Ausgänge, einen Summenausgang S und einen Carry-Ausgang C_{O}. Weiterhin enthält die erfindungsgemäße Addierzelle ein NAND-Gatter NAND1, ein ORNAND-Gatter ORNAND1 sowie einen Inverter I1, analog wie in der konventionellen Addierzelle. Die Summandeneingänge A und B sind jeweils auf einen Eingang eines ersten NAND-Gatters NAND1 geschaltet, an dessem Ausgang das ORNAND-Gatter ORNAND1 mit seinem UND-Eingang angeschlossen ist. Der Carry-Eingang Cᵢ ist über einen Inverter I1 mit dem ersten ODER-Eingang des ORNAND-Gatters ORNAND1, während der Ausgang des ORNAND-Gatters ORNAND1 den Carry-Ausgang C_{O} der erfindungsgemäßen Addierzelle bildet. Weiterhin sind die zwei Summandeneingängen A, B und der Ausgang des NAND-Gatters NAND1 mit einer ersten gestrichelt dargestellten Schaltungsanordnung SA1 und der Carry-Eingang Cᵢ und der Ausgang des Inverters I1 mit einer zweiten gestrichelt dargestellten Schaltungsanordnung SA2 verbunden. Ein erster Ausgang der ersten Schaltungsanordnung SA1 ist mit einem zweiten ODER-Eingang des ORNAND-Gatters ORNAND1 und ein zweiter, dritter und vierter Ausgang der ersten Schaltungsanordnung SA1 mit der zweiten Schaltungsanorndung SA2 verschaltet, ein Ausgang der zweiten Schaltungsanordnung SA2 bildet hierbei den Summenausgang S.

Die erste Schaltungsanordnung SA1 enthält drei p-Kanal- und drei n-Kanal-Schalttransistoren P1, P2, P3 und N1, N2, N3, wobei ein erster und zweiter P1, P2 eine erste Serienschaltung bilden, und ein dritter p-Kanal-Schalttransistor P3 parallel hierzu geschaltet ist. Ein erster Anschluß der ersten Serienschaltung und ein erster Anschluß des dritten p-Kanal-Schalttransistors P3 ist mit einer Versorgungsspanung V_{DD} verbunden, während ein zweiter Anschluß des dritten p-Kanal-Schalttransistors P3 mit einem zweiten Anschluß der ersten Serienschaltung und weiterhin mit einem ersten Anschluß einer aus einem ersten und zweiten n-Kanal-Schalttransistor N1, N2 bestehenden ersten Parallelschaltung und über einen ersten Ausgang der ersten Schaltungsanordnung SA1 mit einem zweiten ODER-Eingang des ORNAND-Gatters ORNAND1 und über einen zweiten, dritten und vierten Ausgang der ersten Schaltungsanordnung SA1 mit der zweiten Schaltungsanordnung SA2 verbunden. Ein zweiter Anschluß der ersten Parallelschaltung ist über einen dritten n-Kanal-Schalttransistor N3 mit der Masse GND verschaltet, während der erste Summandeneingang A an ein Gate des ersten p-Kanal-Schalttransistors P1 und an ein Gate des zweiten n-Kanal-Schalttransistors N2 und der zweite Summandeneingang B an ein Gate des zweiten p-Kanal-Schalttransistors P2 und an ein Gate des ersten n-Kanal-Schalttransistors N1 angeschlossen ist. Der Ausgang des NAND-Gatters NAND1 ist weiterhin mit einem Gate des dritten p-Kanal-Schalttransistors P3 und mit einem Gate des dritten n-Kanal-Schalttransistors N3 verbunden.

In der zweiten Schaltungsanordnung SA2 befinden sich zwei p-Kanal-Schalttransistoren P4, P5 sowie zwei n-Kanal-Schalttransistoren N4 und N5. Ein erster Anschluß des vierten p-Kanal-Schalttransistors P4 ist mit einem Ausgang eines Inverters I1 und mit einem Gate eines fünften p-Kanal-Schalttransistors P5 verbunden. Ein erster Anschluß des vierten n-Kanal-Schalttransistors N4 ist mit dem Carry-Eingang Cᵢ und einem Gate eines fünften n-Kanal-Schalttransistors N5 verbunden. Hierbei bilden der fünfte p-Kanal-Schalttransistor P5 und der fünfte n-Kanal-Schalttransistor N5 eine zweite Parallelschaltung, wobei ein erster Anschluß des fünften p-Kanal-Schalttransistors P5 über einen zweiten Ausgang der ersten Schaltungsanordnung SA1 ein erster Anschluß des fünften n-Kanal-Schalttransistors N5 über einen dritten Ausgang der ersten Schaltungsanordnung SA1 und Gateanschlüsse des vierten p-Kanal-Schalttransistors P4 und des vierten n-Kanal-Schalttransistors N4 über einen vierten Ausgang der ersten Schaltungsanordnung SA1 mit der ersten Schaltungsanordnung SA1 verbunden ist. Der Summenausgang S wird hierbei sowohl jeweils an den zweiten Anschluß des vierten p-Kanal- und des vierten n-Kanal-Schalttransistors P4, N4 als auch jeweils an den zweiten Anschluß des fünften p-Kanal- und des fünften n-Kanal-Schalttransistors P5, N5 angeschlossen.

Bei der erfindungsgemäßen Addierzelle wurde das bereits in der Figur 1 verwendete zweite ORNAND-Gatter ORNAND2 in der Mitte aufgetrennt und die beiden n- und p-Kanal-Schalttransistoren N5 und P5 eingefügt, welche vom Carry- bzw. vom invertierten Carry-Signal angesteuert werden. Zusätzlich wurden die beiden n- und p-Kanal-Schalttransistoren N4 und P4 eingefügt, die vom Ausgangssignal des zweiten ORNAND-Gatters ORNAND2 angesteuert werden und das Carry- bzw. das invertierten Carry-Signal übertragen. Die Addierzelle funktioniert nun so, daß bei einer Identität der Eingangssignale an den Summeneingängen A und B das Carry-Eingangssignal am Carry-Eingang Cᵢ über den vierten n-Kanal-Schalttransistor N4 zum Summenausgang S übertragen wird, bei einer Nichtidentität der Summanden am Summandeneingang A und B das invertierte Carry-Eingangssignal am Carry-Eingang Cᵢ über den vierten p-Kanal-Schalttransistor P4 zum Summenausgang S übertragen wird. Der fünfte n-Kanal-Schalttransistor N5 und der fünfte p-Kanal-Schalttransistor P5 verstärken hierbei diesen Ladungsfluß immer dann, wenn eine "1" über den vierten n-Kanal-Schaltkreis N4 oder eine "0" über den vierten p-Kanal-Schalttransistor P4 übertragen werden soll und vermeiden auf diese Weise einen Abfall um eine Einsatzspannung der Schalttransistoren N4 bzw. P4. Aufgrund dieses Aufbaus der erfindungsgemäßen Addierzelle müssen die Signale sowohl von den Summandeneingängen A, B als auch vom Carry-Eingang Cᵢ zum Summenausgang S bzw. zum Carry-Ausgang C_{O} jeweils nur zwei Gatter durchlaufen. Simulationen mit realisierten Addierzellen bestätigen, daß diese Laufzeiten von Summe- und Carry-Signal annähernd gleich und kleiner als die maximale Laufzeit für Signale in einer konventionellen Addierzelle sind.

Fig. 3 zeigt eine Funktionstabelle für die Addierzelle nach Fig. 1 und für die erfindungsgemäße Addierzelle nach Fig. 2. Hierbei erkennt man, daß der Summenausgang S genau dann "1" ist, wenn der Summandeneingang A = 0, B = 1 und der Carry-Eingang Cᵢ = 0 oder der Summmandeneingang A = 1, B = 0 und der Carry-Eingang Cᵢ = 0 oder der Summandeneingang A = 0, B = 0 und der Carry-Eingang Cᵢ = 1 oder falls die Summandeneingänge A = 1 und B = 1 und der Carry-Eingang Cᵢ = 1 ist. Der Carry-Ausgang Cₒ enthält genau dann eine "1", wenn der Summandeneingang A = 1, B = 1 und der Carry-Eingang Cᵢ = 0 oder der Summandeneingang A = 0, B = 1 und der Carry-Eingang Cᵢ = 1 oder der Summandeneingang A = 1, B = 0 und Cᵢ = 1 oder falls die Summandeneingang A =1, B = 1 und der Carry-Eingang ebenfalls 1 ist. Für alle übrigen Eingangskombinationen der Summandeneingänge A, B und des Carry-Eingangs Cᵢ wird der Summenausgang S und der Carry-Ausgang Cₒ auf "0" gesetzt.

## Patentansprüche

1. Addierzelle für Carry-Save-Arithmetik, mit einem Inverter (I1), einem NAND-Gatter (NAND1), und einem ORNAND-Gatter (ORNAND1), wobei ein erster und zweiter Sumandeneingang (A,B) auf das NAND-Gatter, ein Carry-Eingang (Cᵢ) auf den Inverter (I1), ein Ausgang des NAND-Gatters auf einen UND-Eingang des ORNAND-Gatters, ein Ausgang des Inverters auf einen ersten ODER-Eingang des ORNAND-Gatters aufgeschaltet sind und wobei ein Ausgang des ORNAND-Gatters einen Carry-Ausgang (Cₒ) bildet,
**dadurch gekennzeichnet,**
- daß zwischen einer Versorgungsspannung (V_{DD}) und einem Summenausgang (S) eine Reihenschaltung aus p-Kanal-Schalttransistoren (P1, P2, P5) vorgesehen ist, wobei der mit der Versorgungsspannung verbundene und der nachfolgende p-Kanal-Schalttransistor (P1, P2) durch einen weiteren p-Kanal-Schalttransistor überbrückt sind und je ein Gate-Anschluß dieser überbrückten Transistoren mit einem jeweiligen Sumandeneingang (A,B) verbunden ist,
- daß daß zwischen dem Summenausgang und Masse (GND) eine Reihenschaltung aus n-Kanal-Schalttransistoren (N5, N1, N3) vorgesehen ist, wobei der mittlere (N1) dieser n-Kanal-Schalttransistoren durch einen weiteren n-Kanal-Schalttransistor (N2) überbrückt ist und je ein Gate-Anschluß des mittleren und weiteren n-Kanal-Schalttransistors mit einem jeweiligen Sumandeneingang (A,B) verbunden ist,
- daß ein mit einem Ausgang des Inverters beschalteter Gateanschluß des mit dem Summenausgang verbundenen p-Kanal-Schalttransistors (P5) über einen zusätzlichen p-Kanal-Schalttransistor (P4) und ein mit einem Eingang des Inverters beschalteter Gateanschluß des mit dem Summenausgang verbundenen n-Kanal-Schalttransistor (N5) über einen zu sätzlichen n-Kanal-Schalttransistor (N4) mit dem Summenausgang verbunden sind,
- daß der Ausgang des NAND-Gatters mit dem Gateanschluß des p-Kanal-Schalttransistor (P3), der die beiden p-Kanal-Schalttransistoren (P1, P2) überbrückt, und mit dem Gate-Anschluß des n-Kanal-Schalttransistors (N3), der mit Masse verbunden ist, beschaltet sind und
- daß die Gate-Anschlüsse der beiden zusätzlichen Transistoren (P4, N4) sowie ein zweiter ODER-Eingang des ORNAND-Gatters über die beiden mit dem Summenausgang verbundenen Transistoren (P5, N5) der jeweiligen Reihenschaltung mit dem Summenausgang verbunden sind.

## Claims

1. Adder cell for carry-save arithmetic, comprising an invertor (I1), and NAND gate (NAND1), and an ORNAND gate (ORNAND1), a first and second summand input (A, B) being connected to the NAND gate, a carry input (Cᵢ) being connected to the invertor (I1), an output of the NAND gate being connected to an AND input of the ORNAND gate, an output of the invertor being connected to a first OR input of the ORNAND gate, and an output of the ORNAND gate forming a carry output (Cₒ), characterized
- in that a series circuit composed of p-channel switching transistors (P1, P2, P5) is provided between a supply voltage (V_{DD}) and a sum output (5), the switching transistor (P1) connected to the supply voltage and the downstream p-channel switching transistor (P2) being bridged by a further p-channel switching transistor and one gate terminal each of these bridged transistors being connected to a respective summand input (A, B),
- in that a series circuit composed of n-channel switching transistors (N5, N1, N3) is provided between the sum output and earth (GND), the middle (N1) of these n-channel switching transistors being bridged by a further n-channel switching transistor (N2), and one gate terminal each of the middle and further n-channel switching transistor being connected to a respective summand input (A, B),
- in that a gate terminal, connected to an output of the invertor, of the p-channel switching transistor (P5) connected to the sum output is connected via an additional p-channel switching transistor (P4), and a gate terminal, connected to an input of the invertor, of the n-channel switching transistor (N5) connected to the sum output is connected via an additional n-channel switching transistor (N4) to the sum output,
- in that the output of the NAND gate is connected to the gate terminal of the p-channel switching transistor (P3) which bridges two p-channel switching transistors (P1, P2) and to the gate terminal of the n-channel switching transistor (N3) which is connected to earth, and
- in that the gate-terminals of the two additional transistors (P4, N4) as well as a second OR input of the ORNAND gate are connected to the sum output via the two transistors (P5, N5) of the respective series circuit, which are connected to the sum output.

## Revendications

1. Cellule d'addition pour une arithmétique Carry-Save, comportant un inverseur (I1) et une porte NON-ET (NAND1), une porte OU-NON-ET (ORNAND1), dans laquelle des première et seconde entrées (A,B) de nombres à additionner sont raccordées à la porte NON-ET, une entrée de report (Cᵢ) est raccordée à l'inverseur (I1), une sortie de la porte NON-ET est raccordée à une entrée ET de la porte OU-NON-ET, une sortie de l'inverseur est raccordée à une première entrée OU de la porte OU-NON-ET, et dans laquelle une sortie de la porte OU-NON-ET forme une sortie de report (Cₒ), caractérisée par le fait
- qu'entre une tension d'alimentation (V_{DD}) et une entrée (S) d'un nombre à additionner est prévu un circuit série formé par des transistors de commutation à canal p (P1,P2,P3), le transistor de commutation à canal p (P1), qui est relié à la tension d'alimentation, et le transistor de commutation à canal p suivant (P2) étant shuntés par un autre transistor de commutation à canal p, et respectivement une borne de grille de ces transistors shuntés est reliée à une entrée respective (A,B) d'un nombre à additionner,
- qu'entre la sortie de la somme et la masse (GND) est prévu un circuit série formé par des transistors de commutation à canal n (N5,N1,N3), le transistor médian (N1) parmi ces transistors de commutation à canal N étant shunté par un autre transistor de commutation à canal n (N2), et respectivement une borne de grille du transistor médian et de l'autre transistor de commutation à canal n étant reliées à une entrée respective (A,B) d'un nombre à additionner,
- qu'une borne de grille, raccordée à une sortie de l'inverseur, du transistor de commutation à canal p (P5), relié à la sortie délivrant la somme, est connectée, par l'intermédiaire d'un transistor de commutation à canal p supplémentaire (P4), et une borne de grille, raccordée à une entrée de l'inverseur, du transistor de commutation à canal n (N5) relié à la sortie délivrant la somme, est connectée, par l'intermédiaire d'un transistor de commutation à canal n supplémentaire (N4), à la sortie délivrant la somme,
- que la sortie de la porte NON-ET est reliée à la borne de grille du transistor de commutation à canal p (P3), qui shunte les deux transistors de commutation à canal p (P1,P2), et à la borne de grille du transistor de commutation à canal n (N3), qui est reliée à la masse, et
- que les bornes de grille des deux transistors supplémentaires (P4,N4) ainsi qu'une seconde entrée OU de la porte OU-NON-ET sont reliées à la sortie délivrant la somme, par l'intermédiaire des deux transistors (P5,N5), qui sont reliés à cette sortie délivrant la somme, du circuit série respectif.
